# EUROPÄISCHE PATENTSCHRIFT

(11) **EP 1 945 550 B1**
(45) Veröffentlichungstag und Bekanntmachung des Hinweises auf die Patenterteilung: **09.06.2010**
(21) Anmeldenummer: 06777049.5
(22) Anmeldetag: 24.08.2006
(51) Int. Cl.: B65H 63/032, D06H 3/08, G01D 11/24

(54) **GEHÄUSE FÜR EINE OPTISCHE MESSVORRICHTUNG UND VERFAHREN ZUR HERSTELLUNG EINES GEHÄUSES**
HOUSING FOR AN OPTICAL MEASUREMENT DEVICE AND PROCESS FOR PRODUCING A HOUSING
BOITIER POUR DISPOSITIF DE MESURE OPTIQUE ET PROCEDE DE FABRICATION ASSOCIE

(30) Priorität: 19.10.2005 DE 102005050057
(43) Veröffentlichungstag der Anmeldung: 23.07.2008
(73) Patentinhaber: Oerlikon Textile GmbH & Co. KG, 42897 Remscheid (DE)
(72) Erfinder: BIRLEM, Olav, 41812 Erkelenz (DE)
(74) Vertreter: Hamann, Arndt
(86) Internationale Anmeldenummer: PCT/EP2006/008298
(87) Internationale Veröffentlichungsnummer: WO 2007/045298

(56) Entgegenhaltungen:
- DE-A1- 19 519 817
- DE-A1- 19 806 722
- DE-U1- 9 216 879
- GB-A- 1 566 244
- US-A- 4 728 800

## Beschreibung

Die vorliegende Erfindung betrifft ein Gehäuse für eine optische Messvorrichtung gemäß dem Oberbegriff des Anspruches 1 sowie ein Verfahren zur Herstellung eines Gehäuses einer optischen Messvorrichtung gemäß dem Oberbegriff des Anspruches 11.

Die DE 101 50 581 A1 beschreibt ein Gehäuse für einen Garnsensor, welches aus Kunststoff nach dem Spritzgussverfahren hergestellt wird und der Aufnahme von elektronischen Bauelementen des Garnsensors dient. Das Gehäuse weist eine Messeinrichtung mit einem Messspalt auf, durch den ein Faden während der Messung hindurch geführt wird. Die Messeinrichtung umfasst einen optischen Sensor sowie eine Lichtquelle, die in der Messeinrichtung eingefasst und auf den dem Faden zugewandten Seiten des Messspaltes angeordnet sind. Die Oberflächen der Messeinrichtung verschmutzen während der Hindurchführung des Fadens durch an dem Faden haftende Avivage beziehungsweise durch Fasern oder Staub, was zu einer Beeinträchtigung der Messergebnisse führt. Die erforderliche Reinigung der Oberflächen ist problematisch, da bei einer unsachgemäßen Verwendung von aggressiven Reinigern oder durch mechanische Belastungen beim Reinigen die Oberflächen der Messeinrichtung unmittelbar beschädigt werden können.

Aus der US 4,728,800 ist eine optische Messvorrichtung zur Detektierung diskontinuierlicher Fehler in einem Textilgewebe bekannt, bei der zum Schutz der Messeinrichtung diese hinter einer Glasscheibe angeordnet wird. Die Vorrichtung umfasst ein Gehäuse, das der Aufnahme optischer Bauelemente eines Detektorsystems dient. An der Glasscheibe wird das zu überwachende Textilgewebe vorbeigeführt. Die Glasscheibe verhindert das Eindringen von Staub und anderen Fremdkörpern in das Gehäuseinnere, wodurch die Funktion der optischen Bauelemente der Messvorrichtung erhalten wird. Die Glasscheibe wird in einer Nut auf einer Seite des Gehäuses aufgenommen und zum Gehäuse durch eine geeignete Dichtung abgedichtet und dabei mittels des Dichtmaterials in der Nut eingefasst.

Weiterhin ist es aus dem Stand der Technik bekannt, derartige Glasscheiben mittels eines Klebstoffes mit dem Gehäuse zu verkleben. Ziel dieser Verklebung ist es ebenfalls, das Eindringen von Staub oder anderen Fremdkörpern durch Spalten, die aufgrund der auftretenden Fügetoleranzen zwischen dem Gehäuse und der Glasscheibe entstehen, in die Messvorrichtung zu verhindern, wie auch eine mechanische Festigkeit gegen ein Herausfallen der Glasscheibe zu erzeugen.

Diese aus dem Stand der Technik bekannten Verfahrensweisen zur Anbringung von Glasscheiben an dem Gehäuse der optischen Messvorrichtung vermögen jedoch nicht, eine Reihe unerwünschter Einflüsse zu beseitigen oder zu vermeiden. So neigt der zum Verkleben der Glasscheiben verwendete Kleber dazu, durch. Reinigungsmittel angegriffen oder zersetzt zu werden, die zur erforderlichen regelmäßigen Reinigung der Glasscheiben verwendet werden. Dies kann dazu führen, dass die Glasscheiben nicht mehr ausreichend gegen ein Herausfallen gesichert sind.

Dies gilt gleichermaßen für das gemäß der US 4,728,800 verwendete Dichtungsmaterial. Darüber hinaus können sich an den über das Gehäuse hinausragenden Kanten der Glasscheibe Fasern am Kleber beziehungsweise an dem Dichtungsmaterial ansammeln. Dies führt zu einer Beeinträchtigung der Funktionalität der Messvorrichtung aufgrund der Verschmutzung durch die Fasern oder Staub, insbesondere wenn die Messvorrichtung zur Durchführung von Reflexlichtdetektion und Detektion der Abschattung ausgebildet ist.

Der Erfindung liegt somit die Aufgabe zugrunde, ein Gehäuse für eine optische Messvorrichtung unter Vermeidung der aus dem Stand der Technik bekannten Nachteile vorzuschlagen, sowie ein Verfahren zur Herstellung eines Gehäuses für eine optische Messvorrichtung bereitzustellen, welches einfach und kostengünstig durchführbar ist.

Diese Aufgabe wird erfindungsgemäß durch ein Gehäuse mit den kennzeichnenden Merkmalen des Anspruches 1 und ein Verfahren mit den kennzeichnenden Merkmalen des Anspruches 11 gelöst.

Vorteilhafte Ausgestaltungen der Erfindung sind Gegenstand der Unteransprüche.

Gemäß dem Anspruch 1 ist vorgesehen, dass am Gehäuse ein Glaseinsatz angeordnet ist, welcher dem Schutz der Bauelemente vor Umgebungseinflüssen dient, und dass der Glaseinsatz mittels der beim Urformen auftretenden Schrumpfung derart in das Gehäuse eingepasst ist, dass ihn das Gehäuse dichtend rahmenartig einschließt. Auf diese Weise wird zwischen dem Glaseinsatz und dem Gehäuse ein staubdichter Abschluss erreicht, wodurch die Qualität der im Gehäuse angeordneten Messvorrichtung erhalten bleibt. Da es nicht zu unerwünschten Faseransammlungen oder Staubablagerungen in den Spalten zwischen dem mindestens einen Glaseinsatz und dem Gehäuse kommen kann, die die Messgenauigkeit nachhaltig beeinflussen können, wird der Aufwand zur Freihaltung dieses Bereiches im Messschlitz, durch welchen das zu überwachende Garn der Messvorrichtung zugeführt wird, erheblich verringert. Durch den Verzicht auf die Verwendung von Klebern oder anderen Dicht- und Fixiermaterialien, werden überstehende Kanten, die ebenfalls für Staub- oder Faserablagerungen anfällig sind, vermieden.

Insbesondere kann der Glaseinsatz bündig mit dem ihn umgebenden Gehäuse abschließen. Dadurch wird erreicht, dass sich keine über die Gehäuseoberfläche hinausragenden Kanten ausbilden, wie es bei den Befestigungsarten gemäß dem Stand der Technik der Fall ist, die zu unerwünschten Faser- oder Staubablagerungen führen.

Vorzugsweise kann der zur Herstellung des Gehäuses verwendete Kunststoff ein hochfester Kunststoff mit geringer Schrumpfungsneigung sein. Ein derartiger Kunststoff zeichnet sich dadurch aus, dass das aus ihm hergestellte Gehäuse so verwindungssteif ist, so dass ein Bruch des Glaseinsatzes durch ein geringfügiges Verdrehen des Gehäuses aufgrund einer äußeren mechanischen Belastung, wie sie beispielsweise bei der erforderlichen Reinigung des Glaseinsatzes auftritt, vermieden werden kann. Zum anderen ist die Schrumpfungsneigung, wie bereits ausgeführt, ausreichend, um den Glaseinsatz beim Urformen dichtend und bündig einzupassen.

Insbesondere kann der Kunststoff im Wesentlichen aus einem teilkristallinen aromatisierten Thermoplast, wie Polyarylamid bestehen. Daraus lässt sich ein mechanisch belastbares, verwindungssteifes Gehäuse herstellen. Dies wird insbesondere durch die Verwendung von Füllmaterialien, wie beispielsweise Glasfaser, mineralische Füllstoffe, Kohlefaser oder dergleichen erreicht, die dem Thermoplast zugefügt werden. Die beim Schrumpfen des zur Herstellung des Gehäuses verwendeten Kunststoffes auftretenden Druckkräfte, insbesondere an den äußeren Kanten des Glaseinsatzes, führen aufgrund ihrer geringen Größe nicht dazu, dass der Glaseinsatz durch die in ihm erzeugten inneren Spannungen zerspringt, wenn durch den Vorgang des Schrumpfens der Glaseinsatz in das Gehäuse eingepasst wird.

In bevorzugter Weiterbildung der Erfindung kann der Glaseinsatz eine Materialstärke zwischen 0,5 mm und 2 mm aufweisen. Dabei kann der Glaseinsatz planparallele Oberflächen aufweisen. Überraschend hat sich gezeigt, dass das Schrumpfungsverhalten des Kunststoffes den Einsatz von Glaseinsätzen mit geringer Materialstärke erlaubt. Die Elastizität des Glaseinsatzes ist ausreichend, um die beim Schrumpfen erzeugten Spannungen aufnehmen zu können, ohne dass es zum Bruch des Glaseinsatzes kommt. Andererseits ist der Glaseinsatz so formstabil, dass es nicht zu Verformungen der Oberfläche kommt, die zu einer Messwertverfälschung führen können.

Durch eine möglichst geringe Materialstärke des Glaseinsatzes wird der zurückzulegende Weg des Lichtes durch den Glaseinsatz minimiert. Dies ist für die Messgenauigkeit und den Meßaufwand von besonderem Vorteil, da mit zunehmender Materialstärke die Streuung des von einer Lichtquelle ausgehenden Lichtes auf seinem Weg zu einem Empfänger, wie beispielsweise einer Photodiode oder einem sonstigen optischen Sensor, zunimmt. Um den längeren Weg zu kompensieren, müsste die Oberfläche des Empfängers entsprechend vergrößert werden. Dies geht jedoch mit einem zunehmenden Einfluss an Fremdlicht einher, welches auf den Empfänger auftrifft und dessen Messgenauigkeit negativ beeinflusst. Unter Fremdlicht wird beispielsweise das Tageslicht oder eine künstliche Beleuchtung verstanden, welches direkt oder indirekt durch den Glaseinsatz auf den Empfänger treffen kann. Die Verwendung von Glaseinsätzen geringer Materialstärke ermöglicht somit den Einsatz von Empfängern mit kleiner Oberfläche, wodurch die Messgenauigkeit durch die Reduzierung der Fremdlichteinflüsse verbessert wird. Außerdem wird durch den für das Gehäuse verwendeten Kunststoff der Einsatz von Glas mit dieser geringen Materialstärke ermöglicht, da aufgrund der hohen Steifigkeit und Formstabilität des Gehäuses eine auf das Gehäuse aufgebrachte mechanische Belastung nicht dazu führt, dass der Glaseinsatz zerstört wird.

Des Weiteren kann das Gehäuse eine durch Galvanisieren aufgebrachte metallische Beschichtung aufweisen. Die Beschichtung des Gehäuses dient vor allem dem Schutz der empfindlichen elektronischen Bauteile vor elektrostatischen Entladungen, die die Messgenauigkeit und Lebensdauer negativ beeinflussen.

Hierzu weist der Glaseinsatz einen derart geringen oder keinen Bleianteil auf, um während der Galvanisierung des Gehäuses eine Metallisierung des Glaseinsatzes zu vermeiden.

Vorteilhafterweise können im Inneren des Gehäuses Stege angeordnet sein, die den mindestens einen Glaseinsatz auf seiner dem Inneren des Gehäuses zugewandten Seite an dessen Rändern abschnittsweise überlappen. Auf diese Weise kann vermieden werden, dass der mindestens eine Glaseinsatz durch einen von außen auf seine Oberfläche ausgeübten Druck, beispielsweise beim erforderlichen Reinigen des Glaseinsatzes, in das Innere des Gehäuses eingedrückt wird, was seinerseits zu einer Beschädigung der Messvorrichtung oder zumindest zur Zerstörung des Glaseinsatzes führen kann.

Alternativ zu einer planparallelen Ausbildung der Oberflächen des Glaseinsatzes kann der Glaseinsatz mit einer planen und einer gewölbten Oberfläche ausgebildet sein. Ebenso können beide Oberflächen gewölbt ausgeführt sein. Dadurch kann der Glaseinsatz noch zusätzliche optische Funktionen übernehmen.

Vorteilhafterweise können im Bereich eines der Zuführung eines Messobjektes dienenden Messschlitzes zwei einander gegenüberliegende Glaseinsätze angeordnet sein. Dies ermöglicht die einander gegenüberliegende Anordnung einer Lichtquelle als Sender und eines Sensors als Empfänger, was sich für die Messzwecke als vorteilhafte Anordnung erweist.

Gemäß dem Anspruch 11 wird vorgeschlagen, dass der mindestens eine Glaseinsatz vor dem Urformen des Gehäuses in einem der Herstellung des Gehäuses dienenden Werkzeug angeordnet wird, und dass der mindestens eine Glaseinsatz beim Urformen des Gehäuses so mit dem Gehäuse verbunden wird, dass er seine exakte Position erhält und die für die Bauelemente der Messvorrichtung erforderliche Abdichtung gewährleistet. Die auf diese Weise erzielbare exakte Einpassung des mindestens einen Glaseinsatzes in das Gehäuse weist den Vorteil auf, dass das Innere des Gehäuses, welches der Aufnahme der Bauelemente der optischen Messvorrichtung dient, abgeschirmt wird und im Wesentlichen frei von Staub oder anderen Fremdkörpern bleibt. Weiterhin wird beim Urformen eine passgenaue Anordnung des mindestens einen Glaseinsatzes in der dafür vorgesehenen Aussparung des Gehäuses erreicht.

Ein nachträgliches Einsetzen des mindestens einen Glaseinsatzes in das Gehäuse und das Verkleben mit diesem in einem nachfolgenden Arbeitsgang ist nicht mehr erforderlich, wodurch die Herstellkosten reduziert werden. Durch den Fortfall der Verwendung von Klebstoffen oder anderer Dicht- oder Fixiermittel zur Befestigung und Abdichtung des Glaseinsatzes treten an dem den Glaseinsatz umgebenden Gehäuse keine zusätzlichen Kanten auf, an denen es zu einer ungewollten Ansammlung von Fasern oder Staub kommen kann. Des Weiteren ist der auf diese Weise angebrachte Glaseinsatz gegenüber Reinigungsmitteln unempfindlich, da sich zwischen dem Glaseinsatz und dem Gehäuse keine Substanzen zur Abdichtung beziehungsweise Befestigung befinden, die durch die Reinigungsmittel angegriffen oder zersetzt werden können Vorteilhafterweise kann durch das Schrumpfen des zur Herstellung des Gehäuses verwendeten Materials der Glaseinsatz vom umgebenden Gehäuse eingespannt werden. Auf diese Weise kann man sich die beim Urformen stets auftretende Schrumpfung des zur Herstellung des Gehäuses verwendeten Materials zunutze machen und eine bündige und formschlüssige Einpassung des Glaseinsatzes im Gehäuse erreichen, ohne dabei auf zusätzliche Hilfsmittel zur Abdichtung oder Befestigung zurückgreifen zu müssen.

Insbesondere kann durch den sich an das Urformen anschließenden Schrumpfungsprozess eine durchdringungsfreie Anordnung des Glaseinsatzes am Gehäuse erreicht werden. Aufgrund des Verzichts auf die Verwendung von beispielsweise Nieten, Schrauben oder dergleichen, mittels derer der Glaseinsatz an dem Gehäuse alternativ zur Verwendung eines Klebstoffes oder eines entsprechenden Dicht- oder Fixiermittels befestigt werden kann, werden keine zusätzlichen Überstände im Messbereich erzeugt, die Angriffspunkte für eine Ansammlung von Fasern oder Staub an Kanten oder an über die Oberfläche des Gehäuses oder des Glaseinsatzes hinausragenden Erhebungen sind.

Weiterhin kann das Gehäuse nach dem Urformen galvanisiert werden. Eine galvanische Beschichtung führt zu einer gleichmäßigen und lückenlosen Beschichtung, die sich kostengünstig auf einer chemisch aufgebrachten Basisschicht aufbringen lässt. Dies hat den Vorteil, dass etwaige fertigungstechnisch bedingte Kapillarspalten oder Ungleichmäßigkeiten im Übergangsbereich zwischen dem Gehäuse und dem Glaseinsatz ausgefüllt und ausgeglichen werden können.

Ein weiterer Vorteil der Galvanisierung des Gehäuses besteht darin, dass sich beim Galvanisieren um den Rand des Glaseinsatzes ein schmaler Rahmen ausbildet, der den Übergang zwischen dem Gehäuse und dem Glaseinsatz einfasst. Dieser Rahmen trägt dazu bei, den Glaseinsatz zusätzlich zu fixieren.

Das Galvanisieren des Gehäuses erfordert eine einheitliche Materialkomposition der zu beschichtenden Oberflächen, da die Verwendung von unterschiedlichen Materialien zur Anwendung unterschiedlicher Flüssigkeiten in den Galvanikbädern führt, die auf die jeweiligen Materialien abgestimmt werden müssen. Somit ist beispielsweise der Einsatz von Puffer- oder Dämmmaterial, welches den Rand des Glaseinsatzes umschließt, nicht möglich. Die Aufbringung einer Schutzschicht auf die Oberfläche des Glaseinsatzes scheidet ebenfalls aus, da diese die optischen Eigenschaften beeinflusst.

Des Weiteren kann das Gehäuse mach dem Galvanisieren wärmebehandelt werden, um verbleibende Restspannungen im Glaseinsatz abzubauen.

Die Erfindung wird nachfolgend anhand eines in den Zeichnungen dargestellten Ausführungsbeispiels näher erläutert.

Es zeigen:
- Fig. 1: eine Schnittansicht eines Gehäuses einer optischen Messvorrichtung;
- Fig. 2: eine Schnittansicht einer ersten Ausführungsform eines Glaseinsatzes;
- Fig. 3: eine Schnittansicht einer zweiten Ausführungsform eines Glaseinsatzes;
- Fig. 4: eine Schnittansicht einer dritten Ausführungsform eines Glaseinsatzes.

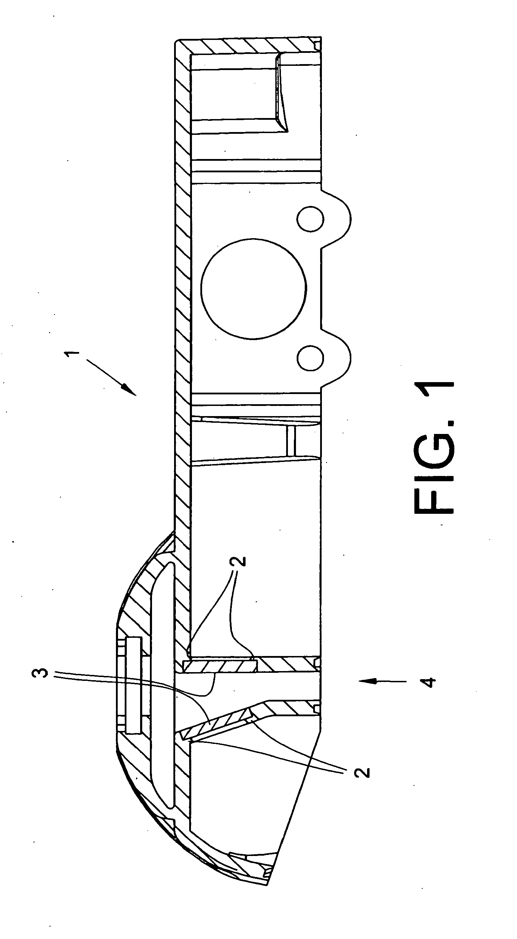

Die in Fig. 1 dargestellte optische Messvorrichtung, wie sie zum Beispiel als Garnüberwachungsvorrichtung an einer Spinnstelle einer Rotorspinnmaschine eingesetzt werden kann, ist vorzugsweise zur Durchführung von Reflexlichtdetektion und Detektion der Abschattung ausgerüstet. Das Funktionsprinzip derartiger Messvorrichtungen ist bekannt und wird hier daher nicht ausführlicher erläutert.

Die Garnüberwachungsvorrichtung ist in einem Gehäuse 1 angeordnet, welches einen Messschlitz 4 aufweist, der der Hindurchführung eines zu überwachenden Garnes dient. Das Garn wird durch den Messschlitz 4 an im Gehäuse 1 angeordneten, nicht dargestellten, optischen Mitteln, wie Linsen, Sensoren, Lichtquellen und dergleichen, vorbeigeführt, um dessen Qualität kontinuierlich zu überwachen. Zum Schutz der optischen Mittel vor Verschmutzung wird das Gehäuse 1 im Messbereich des Messschlitzes 4 durch transparente Abdeckungen verschlossen.

Die Abdeckungen sind als Glaseinsätze 3 ausgebildet. Die Verwendung von Glaseinsätzen 3 als Abdeckungen weist den Vorteil der einfachen und kostengünstigen Herstellung auf. Des Weiteren sind die Glaseinsätze 3 im Vergleich zu den bislang häufig verwendeten Kunststoffscheiben weitgehend unempfindlich gegenüber der Anwendung von Reinigungsmitteln zum Reinigen der Abdeckungen von Avivage und dergleichen. Außerdem laden sich Glaseinsätze 3 im Gegensatz zu Kunststoffeinsätzen nicht statisch auf, was ansonsten zu einer Verschmutzung der Oberfläche der Abdeckung durch anhaftende Faser- und Staubteilchen führen würde.

Die Herstellung des Gehäuses 1 erfolgt durch Urformen im Spritzgussverfahren aus Kunststoff. Zur Befestigung der Glaseinsätze 3 am Gehäuse 1 ist erfindungsgemäß vorgesehen, die Glaseinsätze 3 vor der Herstellung des Gehäuses 1 durch Spritzgießen in dem dafür vorgesehenen Werkzeug derart anzuordnen, dass sie bereits vor dem Spritzgießen ihre am fertigen Gehäuse 1 vorgesehene Position einnehmen. Anschließend werden die im Werkzeug angeordneten Glaseinsätze 3 umspritzt. Durch geeignete Wahl des zur Herstellung des Gehäuses 1 verwendeten Kunststoffes, beispielsweise auf Basis von teilkristallinen aromatisierten Thermoplasten, wie dem unter der Bezeichnung IXEF oder Grivory bekannten Polyarylamid, bei denen es sich um hochfeste Kunststoffe mit geringer Schrumpfungsneigung handelt, wird erreicht, dass die Glaseinsätze 3 während des sich an das Spritzgießen anschließenden Schrumpfungsprozesses in das Gehäuse 1 eingepasst werden. Die geringe Schrumpfungsneigung dieser Kunststoffe bewirkt, dass die beim Schrumpfen des zur Herstellung des Gehäuses 1 verwendeten Kunststoffes, insbesondere an den äußeren Kanten der Glaseinsätze 3 auftretenden Druckkräfte nicht dazu führen, dass diese aufgrund der dort erzeugten Spannungen zerspringen.

Um zu vermeiden, dass die Glaseinsätze 3 durch einen von außen auf sie ausgeübten Druck, beispielsweise beim Reinigen der Glaseinsätze 3, in das Innere des Gehäuses 1 eingedrückt werden, sind im Inneren des Gehäuses 1 Stege 2 vorgesehen, die den jeweiligen Glaseinsatz 3 auf ihrer dem Inneren des Gehäuses 1 zugewandten Seite an deren Rändern zumindest abschnittsweise überlappen.

Im Anschluss an den Schrumpfungsprozess wird das Gehäuse 1 galvanisiert, wodurch möglicherweise verbleibende Spalten zwischen dem Gehäuse 1 und den Glaseinsätzen 3 mit dem zur Galvanisierung verwendeten Metall aufgefüllt und abgedichtet werden. Um zu vermeiden, dass sich während des Galvanisierens Metall an der Oberfläche der Glaseinsätze 3 ablagert, wird für die Herstellung der Glaseinsätze 3 ein Glas verwendet, das einen nur sehr geringen oder keinen Bleianteil aufweist.

Des Weiteren wird beim Galvanisieren um den Rand des Glaseinsatzes ein schmaler Rahmen ausgebildet, der den Übergang zwischen dem Gehäuse und dem Glaseinsatz einfasst. Durch diesen Rahmen werden eventuell vorhandene Kanten oder Unregelmäßigkeiten im Bereich zwischen dem Gehäuse und dem Glaseinsatz ausgeglichen. Zudem trägt dieser Rahmen dazu bei, den Glaseinsatz zusätzlich zu fixieren, um ihn vor dem Herausfallen zu bewahren.

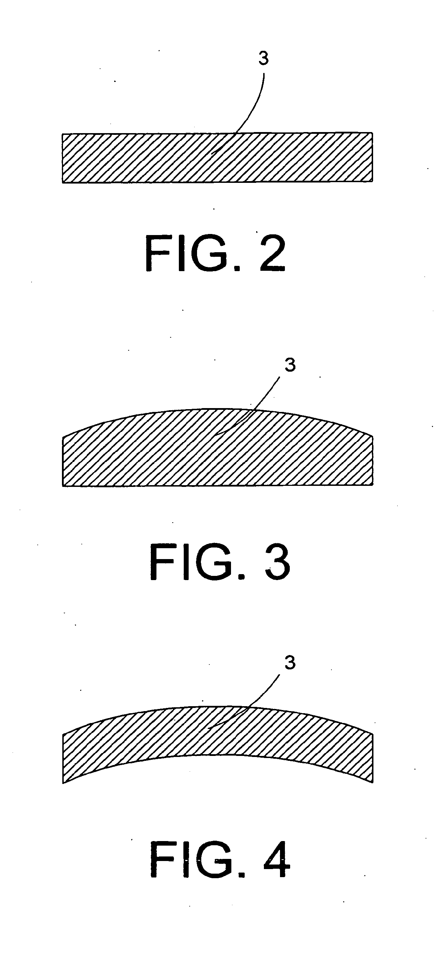

Die Fig. 2 bis Fig. 4 zeigen drei Ausführungsformen des Glaseinsatzes 3, wobei der in Fig. 2 dargestellte Glaseinsatz 3 planparallele Oberflächen aufweist während der in Fig. 3 dargestellte Glaseinsatz 3 eine plane und eine gewölbte Oberfläche besitzt. Gemäß Fig. 4 sind beide Oberflächen gewölbt ausgeführt. Die Materialstärke des Glaseinsatzes 3 beträgt dabei zwischen 0,5 mm und 2 mm.

## Patentansprüche

1. Gehäuse (1) für eine optische Messvorrichtung, insbesondere zur Garnüberwachung, wobei das Gehäuse (1) aus einem Kunststoff durch Urformen hergestellt wird, das Bauelemente der Messvorrichtung, wie Lichtquelle, Sensor oder Linse, aufnimmt, wobei am Gehäuse (1) ein Glaseinsatz (3) angeordnet ist, welcher dem Schutz der Bauelemente vor Umgebungseinflüssen dient, **dadurch gekennzeichnet, dass** der Glaseinsatz (3) mittels der beim Urformen auftretenden Schrumpfung derart in das Gehäuse (1) eingepasst ist, dass ihn das Gehäuse (1) dichtend rahmenartig einschließt.

2. Gehäuse (1) nach Anspruch 1, **dadurch gekennzeichnet, dass** der Glaseinsatz (3) bündig mit dem ihn umgebenden Gehäuse (1) abschließt.

3. Gehäuse (1) nach einem der Ansprüche 1 oder 2, **dadurch gekennzeichnet, dass** der zur Herstellung des Gehäuses (1) verwendete Kunststoff ein hochfester Kunststoff mit geringer Schrumpfungsneigung ist.

4. Gehäuse (1) nach Ansprüchen 1 bis 3, **dadurch gekennzeichnet, dass** der Kunststoff im Wesentlichen aus teilkristallinen aromatisierten Thermoplasten besteht.

5. Gehäuse (1) nach einem der Ansprüche 1 bis 4, **dadurch gekennzeichnet, dass** der Glaseinsatz (3) eine Materialstärke zwischen 0,5 mm und 2 mm aufweist.

6. Gehäuse (1) nach einem der Ansprüche 1 bis 5, **dadurch gekennzeichnet, dass** das Gehäuse (1) eine durch Galvanisieren aufgebrachte metallische Beschichtung aufweist.

7. Gehäuse (1) nach einem der Ansprüche 1 bis 6, **dadurch gekennzeichnet, dass** der Glaseinsatz (3) einen derart geringen oder keinen Bleianteil aufweist, um während der Galvanisierung des Gehäuses (1) eine Metallisierung des Glaseinsatzes (3) zu vermeiden.

8. Gehäuse (1) nach einem der Ansprüche 1 bis 7, **dadurch gekennzeichnet, dass** im Inneren des Gehäuses (1) Stege (2) angeordnet sind, die den jeweiligen Glaseinsatz (3) auf ihrer dem Inneren des Gehäuses (1) zugewandten Seite an deren Rändern abschnittsweise überlappen.

9. Gehäuse (1) nach einem der Ansprüche 1 bis 8, **dadurch gekennzeichnet, dass** der Glaseinsatz (3) mit einer planen und einer gewölbten Oberfläche ausgeführt ist.

10. Gehäuse (1) nach einem der Ansprüche 1 bis 9, **dadurch gekennzeichnet, dass** im Bereich eines der Zuführung eines Messobjektes dienenden Messschlitzes (4) zwei einander gegenüberliegende Glaseinsätze (3) angeordnet sind.

11. Verfahren zur Herstellung eines Gehäuses (1) einer optischen Messvorrichtung nach einem der Ansprüche 1 bis 10,
**dadurch gekennzeichnet,**
- **dass** der mindestens eine Glaseinsatz (3) vor dem Urformen des Gehäuses (1) in einem der Herstellung des Gehäuses (1) dienenden Werkzeug angeordnet wird; und
- **dass** der mindestens eine Glaseinsatz (3) beim Urformen des Gehäuses (1) so mit dem Gehäuse (1) verbunden wird, dass er seine exakte Position erhält und die für die Bauelemente der Messvorrichtung erforderliche Abdichtung gewährleistet wird.

12. Verfahren nach Anspruch 11, **dadurch gekennzeichnet, dass** durch das Schrumpfen des zur Herstellung des Gehäuses (1) verwendeten Materials der Glaseinsatz (3) eingespannt wird.

13. Verfahren nach einem der Ansprüche 11 oder 12, **dadurch gekennzeichnet, dass** das Gehäuse (1) galvanisiert wird.

14. Verfahren nach Anspruch 13, **dadurch gekennzeichnet, dass** das Gehäuse (1) nach dem Galvanisieren wärmebehandelt wird.

## Claims

1. Housing (1) for an optical measurement device, in particular for yam monitoring, the housing (1) being produced from a plastic material by prototyping and receiving components of the measurement device such as the light source, sensor or lens, wherein a glass insert (3) is arranged on the housing (1) and is used for the protection of the components from environmental influences, **characterised in that** the glass insert (3) is fitted into the housing (1) by means of the shrinkage occurring during prototyping in such a way that the housing (1) sealingly encloses it in the manner of a frame.

2. Housing (1) according to claim 1, **characterised in that** the glass insert (3) terminates flush with the housing (1) surrounding it.

3. Housing (1) according to either of claims 1 or 2, **characterised in that** the plastic material used to produce the housing (1) is a high-strength plastic material with a low tendency to shrink.

4. Housing (1) according to claims 1 to 3, **characterised in that** the plastic material substantially consists of partially crystalline aromatised thermoplastic.

5. Housing (1) according to any one of claims 1 to 4, **characterised in that** the glass insert (3) has a material thickness of between 0.5 mm and 2 mm.

6. Housing (1) according to any one of claims 1 to 5, **characterised in that** the housing (1) has a metallic coating applied by electroplating.

7. Housing (1) according to any one of claims 1 to 6, **characterised in that** the glass insert (3) has a proportion of lead which is low or non-existent such that any metallisation of the glass insert (3) is avoided during the electroplating of the housing (1).

8. Housing (1) according to any one of claims 1 to 7, **characterised in that** webs (2), which overlap the respective glass insert (3) in sections on the side thereof facing the interior of the housing (1) at the edges thereof, are arranged in the interior of the housing (1).

9. Housing (1) according to any one of claims 1 to 8, **characterised in that** the glass insert (3) is configured to have a planar and a curved surface.

10. Housing (1) according to any one of claims 1 to 9, **characterised in that** two opposing glass inserts (3) are arranged in the region of a measurement slot (4) being used to supply an object for measurement.

11. Method for producing a housing (1) of an optical measurement device according to any one of claims 1 to 10,
**characterised in that**
- the at least one glass insert (3), prior to the prototyping of the housing (1), is arranged in a mould being used to produce the housing (1); and
- the at least one glass insert (3) is connected to the housing (1) during the prototyping of the housing (1) in such a way that it is given its exact position and the sealing required for the components of the measurement device is ensured.

12. Method according to claim 11, **characterised in that** the glass insert (3) is clamped in by the shrinkage of the material used to produce the housing (1).

13. Method according to either of claims 11 or 12, **characterised in that** the housing (1) is electroplated.

14. Method according to claim 13, **characterised in that** the housing (1) is heat-treated after the electroplating.

## Revendications

1. Boîtier (1) pour un dispositif de mesure optique, en particulier pour la surveillance de fils, le boîtier (1) étant fabriqué par moulage à partir d'une matière plastique, lequel reçoit des composants du dispositif de mesure, comme la source de lumière, le capteur ou la lentille, un insert en verre (3) qui sert à la protection des composants contre les influences de l'environnement étant disposé sur le boîtier (1), **caractérisé en ce que** l'insert en verre (3) est adapté dans le boîtier (1) au moyen du retrait survenant lors du moulage de telle manière que le boîtier (1) l'entoure de manière étanche à la manière d'un cadre.

2. Boîtier (1) selon la revendication 1, **caractérisé en ce que** l'insert en verre (3) se termine en affleurement avec le boîtier (1) qui l'entoure.

3. Boîtier (1) selon une des revendications 1 ou 2, **caractérisé en ce que** la matière plastique utilisée pour la fabrication du boîtier (1) est une matière plastique très résistante à faible tendance au retrait.

4. Boîtier (1) selon les revendications 1 à 3, **caractérisé en ce que** la matière plastique est composée essentiellement de thermoplastiques semi-cristallins aromatisés.

5. Boîtier (1) selon une des revendications 1 à 4, **caractérisé en ce que** l'insert en verre (3) présente une épaisseur de matériau comprise entre 0,5 mm et 2 mm.

6. Boîtier (1) selon une des revendications 1 à 5, **caractérisé en ce que** le boîtier (1) présente un revêtement métallique appliqué par galvanisation.

7. Boîtier (1) selon une des revendications 1 à 6, **caractérisé en ce que** l'insert en verre (3) présente une proportion de plomb nulle ou assez faible pour éviter une métallisation de l'insert en verre (3) pendant la galvanisation du boîtier (1).

8. Boîtier (1) selon une des revendications 1 à 7, **caractérisé en ce qu'**à l'intérieur du boîtier (1) sont disposées des nervures (2) qui recouvrent partiellement l'insert en verre (3) respectif sur ses bords de son côté tourné vers l'intérieur du boîtier (1).

9. Boîtier (1) selon une des revendications 1 à 8, **caractérisé en ce que** l'insert en verre (3) est réalisé avec une surface plane et une surface bombée.

10. Boîtier (1) selon une des revendications 1 à 9, **caractérisé en ce que** deux inserts en verre (3) situés l'un en face de l'autre sont disposés au niveau d'une fente de mesure (4) servant à l'amenée d'un objet à mesurer.

11. Procédé de fabrication d'un boîtier (1) d'un dispositif de mesure optique selon une des revendications 1 à 10,
**caractérisé en ce**
- **que** ledit au moins un insert en verre (3) est disposé avant le moulage du boîtier (1) dans un moule servant à la fabrication du boîtier (1) ; et
- **que** lors du moulage du boîtier (1), ledit au moins un insert en verre (3) est lié au boîtier (1) de manière qu'il prenne sa position exacte et que l'étanchéité nécessaire pour les composants du dispositif de mesure soit garantie.

12. Procédé selon la revendication 11, **caractérisé en ce que** l'insert en verre (3) est serré par le retrait de la matière utilisée pour la fabrication du boîtier (1).

13. Procédé selon une des revendications 11 ou 12, **caractérisé en ce que** le boîtier (1) est galvanisé.

14. Procédé selon la revendication 13, **caractérisé en ce que** le boîtier (1) subit un traitement thermique après la galvanisation.
